# EUROPÄISCHE PATENTANMELDUNG

(11) **EP 1 122 594 A1**
(43) Veröffentlichungstag der Anmeldung: **08.08.2001**
(21) Anmeldenummer: 01102423.9
(22) Anmeldetag: 02.02.2001
(51) Int. Cl.: G03C 1/498, G03C 8/40, G03D 13/00

(54) **Vorrichtung zum Transport von Einzelblättern durch eine Einrichtung zum Belichten oder Bedrucken der Einzelblätter**

(30) Priorität: 02.02.2000 DE 10004533
(71) Anmelder: Agfa-Gevaert AG, 51373 Leverkusen (DE)
(72) Erfinder: Schwuchow, Joachim, 07616 Thalbürgel (DE); Schulz, Dietmar, 07778 Lehesten , Nerkewitz (DE); Heyne, Jürgen, 99510 Wormstedt (DE); Enders, Wolf-Dieter, 07580 Grossenstein (DE)

(57) **Zusammenfassung**

In einer Vorrichtung zum Transport von Einzelbögen durch eine Einrichtung zum Belichten der Einzelbögen, mit einer Walze und Mitteln, die das Einzelblatt an die Walze andrücken, sowie mit einer Belichtungsstation, in der das Einzelblatt belichtet wird, ist für den Andruck der Einzelblätter an die Walze eine Vielzahl parallel laufender Endlosriemen vorgesehen. Die Walze weist parallele Ringnuten auf, in die Führungsfinger zum Abheben der Einzelblätter von der Walze eingreifen. Die Ringnuten sind so positioniert, dass sie jeweils mit einem Endlosriemen fluchten.

## Beschreibung

Die Erfindung geht aus von einer Vorrichtung zum Transport von Einzelblättern durch eine Einrichtung zum Belichten oder Bedrucken der Einzelblätter nach dem Oberbegriff von Anspruch 1.

In der DE 196 36 235 A1 ist eine Vorrichtung zum Aufzeichnen von Informationen auf thermisch entwickelbarem fotografischem Material beschrieben. In dieser Vorrichtung ist eine beheizte Walze vorgesehen, die jedes Einzelblatt um etwa 180° umlenkt. Im ersten Teil der Umlenkung wird das Einzelblatt über vier Andruckrollen an der Walze fixiert. Zwischen diesen Andruckrollen befindet sich ein Belichtungsspalt, durch den mit einem Laser auf das Einzelblatt geschrieben wird. Nach dem Belichten wird die Andruckfunktion durch ein endloses Band übernommen, mit dem die Walze in diesem Bereich der Umlenkung umschlungen wird. Das Endlosband hat die Aufgabe, das Einzelblatt so eng in Anlage an der Walze zu halten, dass ein bestmöglicher Wärmeübergang zwischen Walze und Einzelblatt stattfinden kann.

Aus der DE 30 00 887 A1 ist ein Tintenstrahldrucker bekannt, bei dem Einzelblätter durch in parallele Ringnuten eingreifende Führungsfinger von einer Walze abgelöst werden.

Es war die Aufgabe der Erfindung, mit einer Walze zum Transportieren von Einzelblättern an einem Belichtungsspalt vorbei korrespondierende Mittel zum Führen der Einzelblätter um die Walze so auszubilden, dass auch bei unterschiedlichen Formaten, insbesondere unterschiedlichen Breiten, eine kontinuierliche, ruckfreie Bewegung der Einzelblätter gewährleistet und ein Verklemmen oder Verkanten ausgeschlossen werden kann.

Gelöst wird die Aufgabe durch eine Vorrichtung mit den Merkmalen nach Anspruch 1.

Durch die parallel verlaufenden Endlosriemen ist jedes Einzelblatt - unabhängig von seiner Größe - in engem Kontakt an die Walze schlupffrei geführt. Die Ringnuten ermöglichen einen Eingriff der Führungsfinger unter die Vorderkante des jeweiligen Einzelblattes, so dass das Blatt stoßfrei von der Walzenoberfläche abgehoben und einer nachgeschalteten Transporteinheit zugeführt werden kann.

Es hat sich nun herausgestellt, dass der Raum, in dem sich die Belichtungseinheit befindet, bei längerem Betrieb auf eine Temperatur von ca. 35°C aufgeheizt wird. Die Einzelblätter, die aus lichtempfindlichem Material bestehen, werden üblicherweise von Rollen abgeschnitten, die sich in lichtdichten Kassetten außerhalb dieses Raumes befinden. Die Kassetten und das darin befindliche lichtempfindliche Material weisen daher normale Raumtemperatur in Höhe von ca. 20°C auf.

Durch den Kontakt mit der Walze erwärmt sich das Papier. Es wurde herausgefunden, dass die Einzelblätter an Stellen, an denen sie nicht mit der Walze in Kontakt kommen, also an den Stellen, an denen sie über die Ringnuten laufen, weit weniger schnell erwärmt werden und dadurch auch weniger sensibilisiert sind. Dies äußert sich durch dunkle Streifen in dem fertigen Bild.

Dieser Effekt wird durch die Positionierung der Ringnuten gegenüber den Endlosriemen vermieden. Auf diese Weise steht jede Stelle des Papiers wenigstens mit einem Endlosriemen oder der Walzenoberfläche in Kontakt, so dass die Einzelblätter zumindest von einer Seite her erwärmt werden. Es tritt dadurch in der lichtempfindlichen Schicht kein Temperatursprung auf und die Streifen im Bild können vermieden werden.

Die Endlosriemen sind als Flachriemen ausgebildet, so dass der Druck auf das Papier auf eine relativ große Fläche verteilt wird. Die Flachriemen sind etwas breiter als die Ringnuten dimensioniert, so dass das lichtempfindliche Papier glatt auf der Walzenoberfläche aufliegt und nicht in die Ringnuten hineingedrückt werden kann. Es hat sich herausgestellt, dass sich die Erwärmung des Papiers von der Ober- und der Unterseite weit weniger auswirkt als eine fehlende Erwärmung von beiden Seiten, so dass sich der überlappende Kontakt zwischen Walze und Endlosriemen an den seitlichen Rändern der Ringnuten nicht schädlich auswirkt und im fertigen Bild nicht sichtbar ist.

Um einen guten Kontakt zwischen Walze und Einzelblatt gewährleisten zu können, sind sowohl vor als auch nach der Belichtungsstation mehrere Endlosriemen vorgesehen, die die Walze jeweils in einem Winkel größer 40° umschlingen.

Es hat sich als vorteilhaft herausgestellt, den Durchmesser der Walze so zu dimensionieren, dass 150 mm nicht unterschritten werden. Bei geringerem Durchmesser würde beispielsweise Fotopapier durch seine Eigenspannung eine Kraft auf die Riemen ausüben, die eine sichere Anlage des Papiers an der Walze nicht mehr gewährleisten.

Die Flachriemen weisen idealerweise eine Breite zwischen 8 und 12 mm auf, während die Ringnuten mit einer Breite von 3 bis 5 mm dimensioniert sind. Es sollte eine Überlappung zwischen Walzenoberfläche auf der einen und Endlosriemen auf der anderen Seite von 2 bis 4 mm beidseitig der Ringnut eingehalten werden. Auf diese Weise ist gewährleistet, dass der Flachriemen exakt auf den Rändern der Ringnut geführt ist, ohne dass die Gefahr besteht, dass das Papier in die Ringnut eingedrückt wird. Andererseits ist die Überlappung so gering, dass keine Gefahr einer örtlichen Temperaturspitze durch die Erwärmung von beiden Seiten besteht.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigen:
- Fig. 1: eine perspektivische, schematische Darstellung einer erfindungsgemäßen Laser-Belichtungseinheit für Fotopapier,
- Fig. 2: einen Schnitt durch die Vorrichtung in Fig. 1,

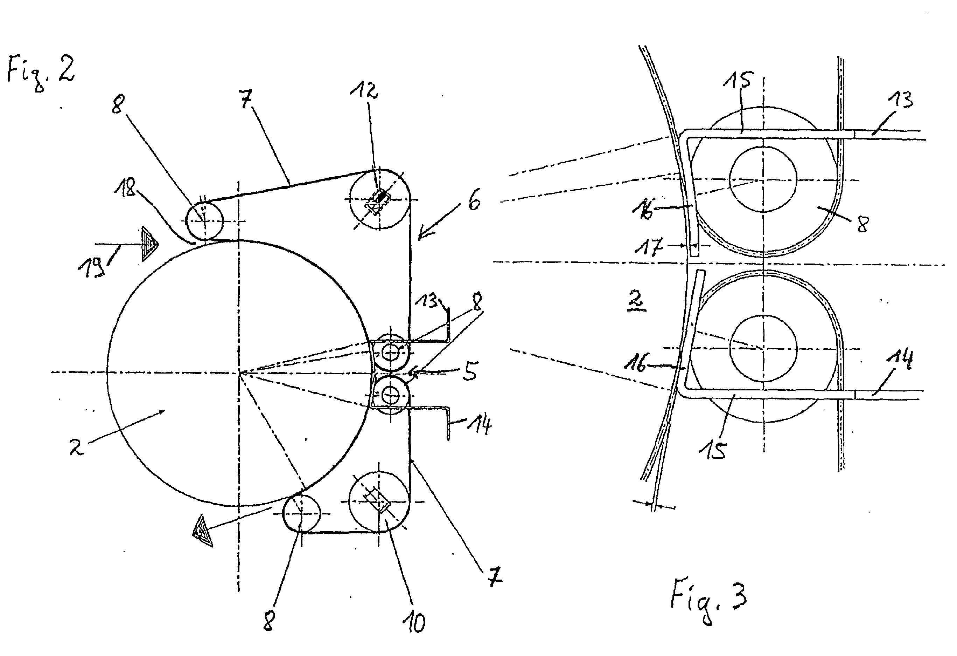

- Fig. 3: ein vergrößertes Detail aus Fig. 2, und
- Fig. 4: die Ansicht eines weiteren Details der in Fig. 1 dargestellten Vorrichtung.

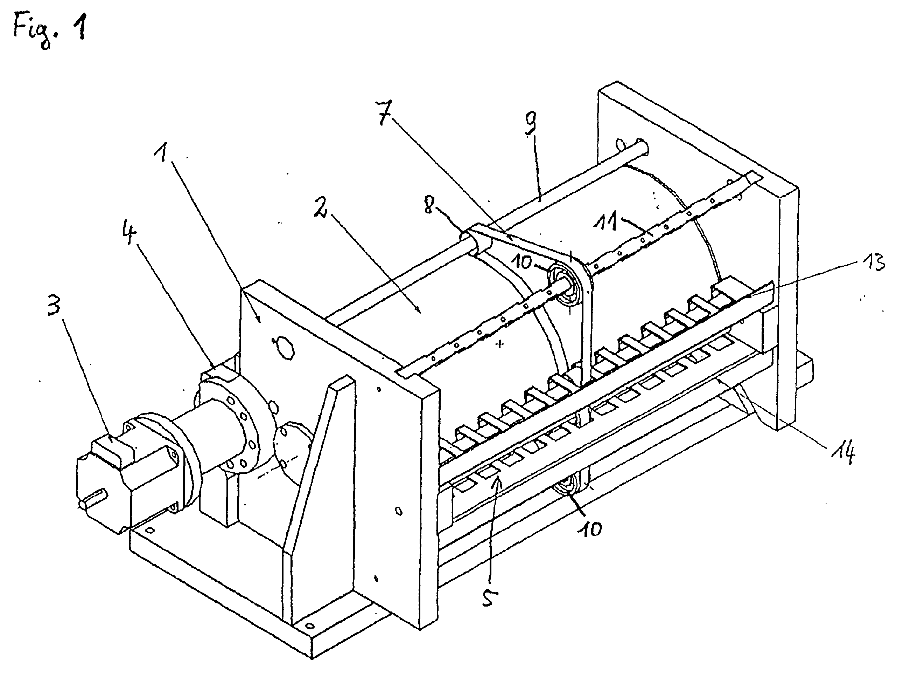

In dem in Fig.1 gezeigten Laser-Belichter ist in dem Gestell 1 eine Printwalze 2 gelagert. Die Printwalze 2 wird durch den Motor 3 angetrieben. Zwischen Motor 3 und Printwalze 2 ist ein Reibradgetriebe 4 geschaltet, welches die schnellen Umdrehungen der Motorachse in eine langsamere, aber besonders gleichmäßige Umdrehung der Printwalze 2 umwandelt.

Auf beiden Seiten des Belichtungsspalts 5 ist je eine Riemeneinheit 6 vorgesehen, die die Einzelblätter in Anlage an der Printwalze 2 halten. Aus Gründen der Übersichtlichkeit ist jeweils nur eine Riemenbaugruppe 7 gezeigt. Die Riemen sind jeweils über zwei feste Umlenkrollen 8 aufgespannt. Parallele Umlenkrollen 8 sind jeweils auf einem Träger 9 gelagert.

Die Umlenkrollen 8 der in Transportrichtung der Einzelblätter vor dem Belichtungsspalt 5 angeordneten Riemeneinheit 6, die den Einzug für die Einzelblätter auf die Printwalze 2 bilden, weisen zur Walzenoberfläche einen etwas größeren Abstand als die übrigen Umlenkrollen 8 auf und bilden so mit der Printwalze 2 einen keilförmigen Einzugsspalt 18, der auch dickere Einzelblätter, deren Vorderkante von der Sollposition leicht abweicht, sicher aufnimmt.

Mit Hilfe der Spannrollen 10 wird jeder Riemen mit definiertem Zug beaufschlagt, so dass er immer mit gleicher Kraft auf die Walzenoberfläche drückt, unabhängig davon, ob sich ein dickes, ein dünnes oder gar kein Papier auf der Printwalze 2 befindet.

Parallele Spannrollen 10 sind ebenfalls auf einem gemeinsamen Träger 11 gelagert, wobei jedes Lager gegen den Träger 11 durch eine Feder 12 in Spannrichtung beaufschlagt ist (s. Fig. 2).

Die einzelnen Riemenbaugruppen 7 besitzen keinen Antrieb und werden ausschließlich über die Printwalze 2 bewegt.

Der Belichtungsspalt 5 wird durch zwei kammartige Leitbleche 13, 14 begrenzt, die mit ihren Zinken 15 durch die Riemenbaugruppen 7 hindurchgreifen. Jeder Zinken 15 weist einen unteren Schenkel 16 auf, der in etwa parallel zur Oberfläche der Printwalze 2 verläuft. Der Spalt 17 zwischen der Printwalze 2 und jedem der Zinkenschenkel 16 entspricht in etwa der Stärke des dicksten zu verarbeitenden Fotopapiers.

Beide Leitbleche 13, 14 sind beweglich, so dass die freien Enden der Zinkenschenkel 16 von der Walzenoberfläche abgehoben werden können und so ein keilförmiger Spalt 17 zwischen Schenkel 16 und Printwalze 2 entsteht.

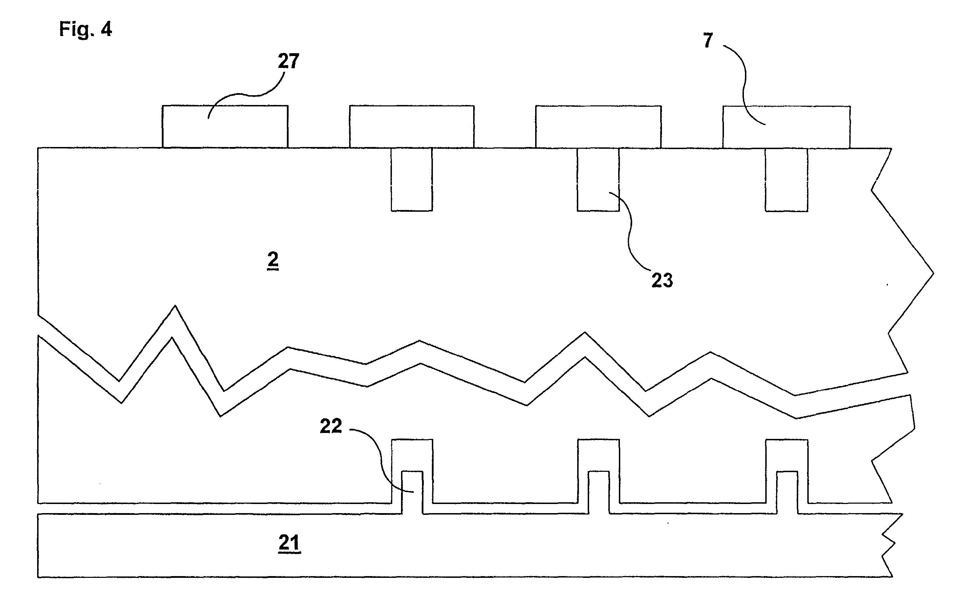

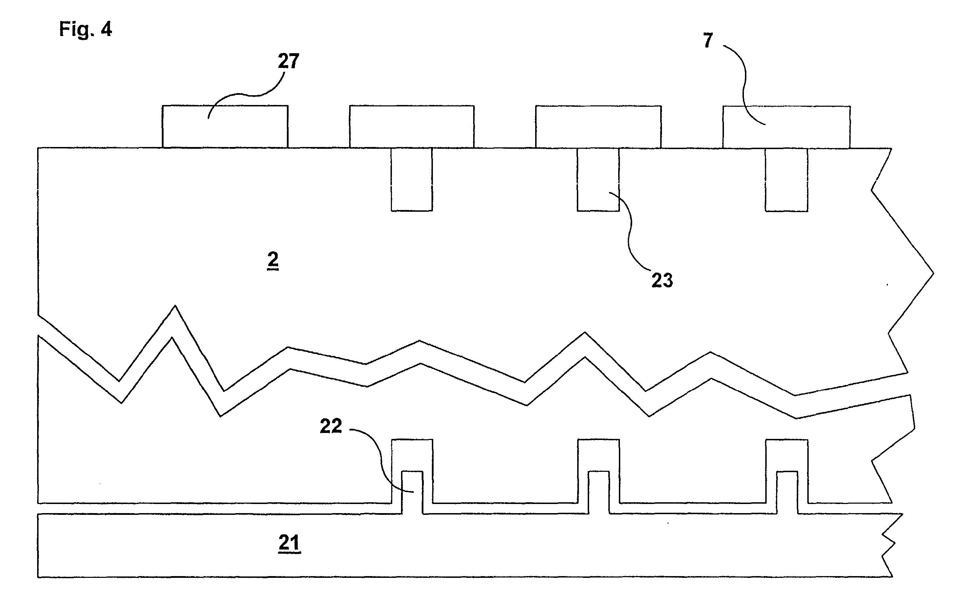

Aus Fig. 4 ist ersichtlich, dass die Printwalze 2 eine Vielzahl parallel verlaufender Ringnuten 23 aufweist. Am Auswurfspalt, auf den in Fig. 1 der Pfeil 20 hindeutet, ist ein Leitelement 21 vorgesehen, welches die Einzelblätter einer hier nicht dargestellten nachfolgenden, von der Printwalze 2 vollkommen unabhängigen Transporteinheit zuführt.

Dieses Leitelement 21 weist Führungsfinger 22 auf, die in die Ringnuten 23 eingreifen. Vorteilhafterweise sind die Führungsfinger 22 so angeordnet, dass kein Kontakt zu der Printwalze 2 besteht, so dass sich kein Reibungseinfluss nachteilig auf den Gleichlauf der Walze 2 auswirken kann.

Die Führungsfinger 22 greifen in spitzem Winkel unter die Vorderkante der Einzelblätter und heben diese ruckfrei von der Walzenoberfläche ab. Es hat sich herausgestellt, dass hierzu nur eine bestimmte Anzahl Führungsfinger 22 notwendig sind, die eher der Mitte der Printwalze 2 zugeordnet sind. Die äußeren Flachriemen 27 verlaufen daher direkt auf der Walzenoberfläche und sind keiner Ringnut 23 zugeordnet. Die Tatsache, dass die Einzelblätter in diesen Bereichen von oben und von unten erwärmt werden, führt aber nicht zu einer stärkeren Sensibilisierung der lichtempfindlichen Schicht, so dass die Bildqualität nicht darunter leidet.

Die restlichen Flachriemen 27 sind so angeordnet, dass sie die Ringnuten 23 vollständig abdecken. Um eine sichere Auflage dieser Flachriemen 27 auf der Walzenoberfläche zu gewährleisten und ein Einlaufen einer Seitenkante der Flachriemen 27 in eine Ringnut 23 zu verhindern, ist die Breite der Flachriemen 27 größer als die Breite der Ringnuten 23 gewählt. Idealerweise beträgt die Breite der Flachriemen 27 etwa das Zweieinhalbfache der Breite der Ringnuten 23.

Wird nun dem Einzugsspalt 18 in Richtung des Pfeiles 19 ein Einzelblatt zugeführt, bildet sich zwischen den Flachriemen 27 der vorderen Riemeneinheit 6 und der Printwalze 2 ein Spalt in der Breite des Einzelblattes aus. Die daneben liegenden Riemen 27 liegen weiterhin direkt auf der Walzenoberfläche auf. Durch die Entkopplung der einzelnen Riemenbaugruppen 7 wirken keine Quer- oder Drehkräfte auf das Einzelblatt, so dass dieses vollkommen gerade und gleichmäßig transportiert wird.

Bevor die führende Kante des Einzelblattes die direkt vor dem Belichtungsspalt 5 angeordneten Umlenkrollen 8 der ersten Riemeneinheit 6 erreicht, wird das ebenfalls vor dem Belichtungsspalt 5 angeordnete Leitblech 13 so bewegt, dass der untere Schenkel 16 etwa parallel zur Walzenoberfläche verläuft. Das hinter dem Belichtungsspalt 5 liegende Leitblech 14 wird dagegen in eine Stellung gebracht, in der dessen unterer Schenkel 16 mit der Walzenoberfläche einen keilförmigen Spalt bildet.

Die führende Kante des Einzelblattes wird auf diese Weise durch das erste Leitblech 13 eng in Anlage an die Printwalze 2 gehalten und hebt erst nach dem eigentlichen Belichtungsspalt 5 leicht von der Walzenoberfläche ab. Hier wird die Vorderkante aber sofort sanft durch das zweite Leitblech 14 abgefangen und in dem keilförmigen Spalt wieder auf die Printwalze 2 gedrückt. Durch den sehr spitzen Winkel des keilförmigen Spalts wird ein praktisch ruckfreier Transport der Vorderkante über den Belichtungsspalt 5 ermöglicht.

Bevor nun die Hinterkante des Einzelblattes das erste Leitblech 13 erreicht, wird dieses in eine abgehobene Stellung bewegt, in der mit der Printwalze 2 ein keilförmiger Spalt gebildet wird. Erreicht nun die Hinterkante dieses Leitblech 13, kann sie langsam und ruckfrei, der Eigenspannung des Papiers folgend, von der Printwalze 2 um einen geringen Betrag abheben. Da sich das zweite, hinter dem Belichtungsspalt 5 angeordnete Leitblech 14 jedoch in der abgesenkten Stellung befindet, liegt die Hinterkante des Einzelblattes, sobald diese den Belichtungsspalt 5 passiert fast wieder auf der Printwalze 2 auf.

Durch die erfindungsgemäße Anordnung wird ermöglicht, dass Einzelblätter vollkommen randlos von ihrer führenden Kante bis zur Hinterkante in guter Bildqualität belichtet werden können.

Am Ausgangsspalt 20 läuft das Einzelblatt mit seiner Vorderkante sanft auf die in die Ringnuten 23 ragenden Führungsfinger 22 auf und wird so von der Walzenoberfläche abgehoben. Über das Leitelement 21 wird das Einzelblatt der nachfolgenden Transporteinrichtung zugeführt.

Durch die Anordnung der Flachriemen 27 über den Ringnuten 23 wird jedes Einzelblatt auf seinem Weg zwischen Eingangsspalt 18 und Ausgangsspalt 20 gleichmäßig an die Temperatur der Walze 2 und der Endlosriemen 27 herangeführt. Das Sichtbarwerden von Temperatursprüngen in Form von Streifen in den fertigen Bildern wird dadurch sicher vermieden.

Selbstverständlich ist die Erfindung nicht nur auf Laser-Belichter für Fotopapier beschränkt, sondern entfaltet ihre Vorteile auch in anderen Vorrichtungen, in denen Einzelblätter beschrieben werden sollen. Als Beispiel sei hier lediglich noch eine Vorrichtung genannt, in der Einzelblätter mit Hilfe eines Zeilenbelichters, wie einer LCD-Zeile, einer LED-Zeile oder eines Zeilen-DMD (Digital Micromirror Device) beschrieben werden.

## Patentansprüche

1. Vorrichtung zum Transport von Einzelbögen durch eine Einrichtung zum Belichten der Einzelbögen, mit einer Walze und Mitteln, die das Einzelblatt an die Walze andrücken, sowie mit einer Belichtungsstation, in der das Einzelblatt belichtet wird, **dadurch gekennzeichnet,** dass für den Andruck der Einzelblätter an die Walze eine Vielzahl parallel laufender Endlosriemen vorgesehen ist, dass die Walze parallele Ringnuten aufweist, in die Führungsfinger zum Abheben der Einzelblätter von der Walze eingreifen und dass die Ringnuten jeweils gegenüber einem Endlosriemen positioniert sind.

2. Vorrichtung nach Anspruch 1, dadurch gekennzeichnet, dass die Endlosriemen als Flachriemen ausgebildet sind.

3. Vorrichtung nach Anspruch 2, dadurch gekennzeichnet, dass die Flachriemen breiter als die Ringnuten sind.

4. Vorrichtung nach Anspruch 2, dadurch gekennzeichnet, dass die Flachriemen die Walze in einem Winkel von mehr als 40 Grad umschlingen.

5. Vorrichtung nach Anspruch 1, dadurch gekennzeichnet, dass die Walze einen Durchmesser von mindestens 150 mm aufweist.

6. Vorrichtung nach Anspruch 2, dadurch gekennzeichnet, dass die Flachriemen eine Breite zwischen 8 und 12 mm aufweisen.

7. Vorrichtung nach Anspruch 1, dadurch gekennzeichnet, dass die Ringnuten eine Breite zwischen 3 und 5 mm aufweisen.

8. Vorrichtung nach Anspruch 3, dadurch gekennzeichnet, dass die Flachriemen zwischen 4 und 8 mm breiter als die Ringnuten sind.
